# EUROPEAN PATENT APPLICATION

(11) **EP 3 660 086 A1**
(43) Date of publication of application: **03.06.2020**
(21) Application number: 18209598.4
(22) Date of filing: 30.11.2018
(51) Int. Cl.: C08K 3/04

(54) **POLYMER COMPOSITIONS INCLUDING FUNCTIONALIZED CARBON NANOTUBES AND EXHIBITING REDUCED SLOUGHING**

(71) Applicant: SABIC Global Technologies B.V., 4612 PX Bergen op Zoom (NL)
(72) Inventor: MERCX, Frans, 4612 PX Bergen op Zoom (NL); HAGENAARS, Arno, 4612 PX Bergen op Zoom (NL); VAN DE GRAMPEL, Robert, 4612 PX Bergen op Zoom (NL); VASTENHOUT, Sidney, 4612 PX Bergen op Zoom (NL); HOEKS, Theo, 4612 PX Bergen op Zoom (NL)
(74) Representative: J A Kemp LLP

(57) **Abstract**

This disclosure describes a polymer composition that includes a polymer and functionalized carbon nanotubes, and systems and method of formation thereof. The polymer composition includes functionalized carbon nanotubes and one or more polymers. Parts formed from the polymer composition have improved sloughing properties as compared to parts formed from compositions including conventional carbon nanotubes. Additionally, parts formed herein have lower liquid particle count values as compared to parts formed from compositions including conventional carbon nanotubes.

## Description

### FIELD OF INVENTION

The present disclosure relates generally to polymeric compositions, and, but not by way of limitation, to compositions, such as electrically conductive polymeric compositions, and methods and systems for producing the compositions, in which the compositions include carbon nanotubes.

### BACKGROUND

Plastics are abundantly used in electronic devices and packaging applications. As plastics are by nature electrical insulators, plastics tend to hold electrostatic charges and allow electromagnetic/radio frequency to pass through. Electrostatic discharge (ESD) can cause problems and can be detrimental for (sensitive) electronics, whereas electromagnetic/radio frequencies can interfere with the function of the electronics and cause device malfunction. To protect against ESD and/or shield against electromagnetic interface (EMI), some level of conductivity can be imparted to the plastics.

Plastics can be rendered conductive through addition of conductive fillers, most often carbon based materials such as carbon black, carbon fiber, and carbon nanotubes (CNT). Carbon blacks are relatively inexpensive but slough (i.e., shed microscopic particles), which can result in conductive carbon particles deposited on other components and can lead to short-circuiting and malfunctioning. Carbon fibers and CNTs have a lower tendency for sloughing as compared to carbon blacks. While carbon fiber has a lower tendency for sloughing as compared to carbon nanotubes, typically larger amounts of carbon fiber are required to reach a particular level of conductivity as compared to CNTs.

Illustrative, non-limiting examples of devices that are susceptible to sloughing damage include integrated circuits (e.g., "chips") and hard disk drives (HDDs). Integrated circuits damaged by slough during manufacturing often may not function at all. Loose particles of carbon or other materials that have been sloughed off (e.g., carbon slough or slough) on the HDD can affect a cantilever for read-out and can result in errors and device malfunction. Slough can cause damage through scratching a surface and creating surface voids; and the surface voids can lead to failure of the hard disk drive. The problem of sloughing results in increased manufacturing costs, reduced product yields, and premature failure.

With the ever increasing miniaturization in electronics, the requirements with respect to sloughing are increasing and more and more ultra-pure compounds are required. Thus, manufacturing of smaller electronic components faces challenges of identifying one or more techniques and/or one or more materials to manufacture conductive materials with reduced sloughing to enable miniaturization of electronic components and devices.

### SUMMARY

The present disclosure describes compositions of functionalized carbon nanotubes and polymers, and methods, devices, and systems to form the functionalized carbon nanotubes and to form parts therefrom. For example, polymer compositions described herein include functionalized carbon nanotubes and one or more polymers. The functionalized carbon nanotubes have multiple walls (e.g., 5-15 walls) and one or more oxygen based functional groups, such a hydroxyl group, a carboxylic acid group, or a combination thereof. In some implementations, the functionalized carbon nanotubes have an oxidation level between 3 and 25 wt% as determined by thermogravimetric analysis (TGA).

The functionalized carbon nanotubes have increased bonding and adhesion to polymers as compared to conventional carbon nanotubes. For example, functional groups (e.g., oxygen based functional groups) of the functionalized carbon nanotubes contribute to increased adhesion between the functionalized carbon nanotubes and a polymer host of the polymer composition. Additionally, the polymer composition may have increased dispersion of the functionalized carbon nanotubes in the polymer composition. The increased bonding/adhesion and dispersion of the functionalized carbon nanotubes to the polymers reduces a rate at which the functionalized carbon nanotubes are sloughed off of the part formed therefrom. The reduced sloughing properties of the material can be identified by a low liquid particle count, that is a liquid particle count value that is less than or equal to a threshold value, as described further herein. The reduced sloughing properties enable products formed by the parts to have reduced manufacturing costs, increased product yields, and increased mean time to failure. Additionally, the increased bonding/adhesion and dispersion of the functionalized carbon nanotubes to the polymers may increase an amount of functionalized carbon nanotubes that can be included in the polymer composition, such as an amount of functionalized carbon nanotubes that can be included in the polymer composition before degradation of properties of the host polymer. Accordingly, one or more parts formed by polymer compositions with increased functionalized carbon nanotubes may have electrically conductive properties, such as being electrically conductive, being antistatic, or providing electromagnetic shielding.

"Carbon nanotubes", as used herein, refers to allotropes of carbon with a cylindrical nanostructure. The carbon nanotubes often are formed of one-atom-thick sheets (e.g., graphitic sheets) of carbon atoms, i.e. graphene. The sheets are rolled at specific and discrete ("chiral") angles, and the combination of the rolling angle and radius affects nanotube properties. Although a majority of the carbon atoms of the sheets are exposed, the sheets (i.e., the carbon atoms thereof) are relatively inert and typically do not adhere well to a host material (e.g., a polymer matrix).

"Functionalized carbon nanotubes", as used herein, refers to carbon nanotubes whose surfaces are uniformly or non-uniformly modified so as to have a functional chemical moiety associated therewith. These surfaces are functionalized by reaction with oxidizing or other chemical media through chemical reactions or physical adsorption. Functionalized carbon nanotubes can then be further modified by additional reactions to form other functional moieties on the surfaces of the carbon nanotubes. By changing the chemical moieties on the surfaces of the carbon nanotube, the functionalized carbon nanotubes can be physically or chemically bonded to a wide variety of substrates, including polymers. The carbon nanotubes (e.g., double-walled or multi-walled) used to produce the functionalized carbon nanotubes may be grown or formed by conventional processes, such as chemical vapor deposition (CVD) and/or another process.

Functionalized carbon nanotubes, which can be well dispersed in a polymer matrix through polar or covalent interaction, have better adhesion to the host polymer matrix and reduce the tendency for sloughing, as compared to conventional carbon nanotubes. Improved interaction/adhesion (as compared to conventional carbon nanotubes) between the functional carbon nanotubes and the polymer matrix reduces sloughing (e.g., reduces a rate of sloughing, reduces an amount of sloughing, or increases a force to cause sloughing). In addition, the use of certain compatibilizers in combination with functionalized carbon nanotubes allows improving the compatibilization/adhesion to the host polymer matrix (e.g., polymer resin) and further reduces sloughing.

As an illustrative example of functionalization of carbon nanotubes, multi-walled carbon nanotubes are oxidized through either wet chemical methods or plasma treatments and are modified by oxidation to become shortened and oxidized. In a particular implementation, nitric acid or a nitric acid/sulfuric acid aqueous mixture is used to oxidize the multi-walled carbon nanotubes. The nitric acid or the nitric acid/sulfuric acid aqueous mixture also removes most of the metal residues left behind from catalysts used to grow the multi-walled carbon nanotubes by chemical vapor deposition (CVD). The oxidation process causes functional groups (e.g., oxygen based functional groups or oxygen functionalities) to form on sidewalls of the oxidized multi-walled carbon nanotubes. The functional groups are able to form covalent or polar bonds with polymer molecules (e.g., polymer chains) of the polymer to better adhere the functionalized carbon nanotubes to the polymer molecules than bonding unoxidized or unmodified carbon atoms of the functionalized carbon nanotubes or conventional carbon nanotubes to the polymer molecules.

In a particular implementation, oxygen functional groups of functionalized carbon nanotubes have increased polar interactions (e.g., coulomb, hydrogen bonding) and/or increased chemical bonding with a host material (e.g., a polymer matrix). The increased interaction and bonding strength thereof results in reduced sloughing, such as reduced amounts of slough when materials are mechanically contacted, impacted, rubbed, etc. Additionally, the functionalized carbon nanotubes may have increased dispersion (e.g., produce less "clumping" or agglomerates) in polymers as compared to carbon nanotubes, which may further increase bonding and reduce sloughing.

The functionalized carbon nanotubes described herein typically have one or more of the following characteristics: a length between 0.4 and 15 microns, 2-15 sidewalls, an oxidation level, as determined by TGA, of the functionalized carbon nanotubes is between 3 and 25 wt%, an amount of carboxylic acid groups as determined by titration typically ranges from 0.02 to 0.18 millimoles/g of the functionalized carbon nanotubes, an amount of hydroxyl groups typically ranges from 0.04 to 0.34 millimoles/g of the functionalized carbon nanotubes. The functionalized carbon nanotubes described herein may be further chemically modified to allowing tuning of the functional groups to increase interaction and/or bonding with the intended host matrix polymer.

The functionalized carbon nanotubes may be combined with (e.g., blended with) polymers, such as in a melt-compounding operation, to produce polymer compositions (e.g., in pellet form) and/or products made therefrom with a desired conductivity level. Conductive parts/products made from the polymer composition (including the functionalized carbon nanotubes), exhibit reduced sloughing and have lower liquid particle counts (LPC) as compared to conductive part containing conventional carbon nanotubes.

Liquid particle counting is used to measure a size and/or a distribution of particles in a liquid or a solid. The particle size and distribution are measured by irradiating a liquid sample with a laser diode and detecting scattered light therefrom. The properties of the scattered light are related to the particle size. The particle size is measured and the number of particles present in each size range is determined. The size range of the particles measured can be dependent upon the detector used. "Liquid particle counts" as used herein may correspond to a liquid particle count determined by industry standard liquid particle counting methods used by hard disk drive suppliers. Such industry standard methods use a 100 Class clean bench, one or more ultrasonic cleaners, a degassing system, and a pure water system.

To analyze particulate contamination on a solid material, the particulates are extracted from the solid material, typically using water or a water and detergent solution. A beaker containing the particulates (e.g., a sample) and extraction fluid is then placed in an ultrasonic bath. The sample is removed after a period of time, and the extraction fluid is analyzed for particulates present.

In one aspect, the polymer composition disclosed herein exhibits reduced sloughing and/or low particulate contamination. It is desirable that the sloughing/particulate contamination as characterized by liquid particle counts (LPC) is kept low. The term "Liquid Particle Count," as used herein, means the number of particles having a predetermined size distribution that is detected in a liquid sample that is prepared from a product. In one aspect, the polymer composition disclosed herein exhibits a low particulate contamination with liquid particle counts (LPC) of, when formed in a part, less than 5000 counts per milliliter (ml). In some instances, utilizing functionalized carbon nanotubes achieves a 20% reduction or larger in the LPC count of the composition as compared to the LPC count of a similar composition containing non-functionalized carbon nanotubes. The LPC count above is the cumulative particle count of particles ranging in size from 0.2 to 2 micron. In another aspect, when the polymer composition disclosed herein is formed into pellets in which are molded to form a part, e.g., when the polymer composition is in an intermediary stage, the pellets formed from the polymer composition exhibit a cumulative liquid particle count of particles from 0.2 to 2 microns of 50000 per milliliter or less.

In an illustrative LPC test, a sample of a molded part is immersed in ultrapure water (e.g., water from a Pure Lab Pure water machine) in an ultrasonic cleaner or bath. The sample is first subjected to an ultrasonic cleaning step using 40 kHz and 426 W, which is repeated three times. Next the sample is subjected to ultrasonic treatment (e.g., ultrasonic washing), such as 2 minutes of ultrasonic treatment at 68 kilohertz and 103.58 watts. Impingement of ultrasonic waves at surfaces of the sample causes micro-attrition of particles (i.e., particles of the sample are shaken or vibrated off). The particles are counted/measured using a liquid particle count analyzer. For example, a number of the particles is determined using a SLS-1200 LiQuilaz-S02-HF Particle Measurement System and the number represents an LPC-count of the sample.

The polymer composite (including the functionalized carbon nanotubes) may advantageously increase resistance to sloughing, reduce an amount of slough, reduce a size of slough, etc., in materials and products formed therefrom. Examples of products that can benefit from such a conductive polymer with reduced sloughing is hard drive components, integrated circuits, and enclosures. Accordingly, the present disclosure overcomes the existing challenges of forming electrically conductive polymers with reduced sloughing. The conductive polymers with reduced sloughing enable miniaturization of electrical components/devices and prevent damage to electrical components/devices by reducing damage and failure caused by slough.

Some embodiments of the present polymer compositions comprise: functionalized carbon nanotubes, the functionalized carbon nanotubes having multiple walls and one or more oxygen based functional groups; and one or more polymers, where a molded part formed from the polymer composition has improved sloughing properties as measured by liquid particle analysis (LPC) and as compared to another molded part formed from another composition comprising non-functionalized carbon nanotubes, and where the other composition comprises the one or more polymers in substantially similar weight percentages as the one or more polymers of the polymer composition and comprises the non-functionalized carbon nanotubes in a substantially similar weight percentage as the functionalized carbon nanotubes of the polymer composition. In some implementations of the embodiments of the present polymer compositions, the molded part and the other molded part are formed by similar methods, and LPC values of the molded part and the other molded part are obtained by similar LPC testing methods. In some implementations, the molded part formed from the polymer composition has a cumulative liquid particle count of particles from 0.2 to 2 microns of 5000 per milliliter or less. Additionally, or alternatively, pellets formed from the polymer composition have a cumulative liquid particle count of particles from 0.2 to 2 microns of 50000 per milliliter or less, where the pellets are used to form the molded part, and where the one or more oxygen based functional groups include a hydroxyl group, a carboxylic acid group, or a combination thereof.

In some of the foregoing embodiments of the polymer compositions, the functionalized carbon nanotubes have an oxidation level between 3 and 25 wt% as determined by thermogravimetric analysis (TGA). In some implementations, performing the TGA includes heating dried functionalized carbon nanotubes at a rate of 5 degrees C per minute from room temperature to 1000 degrees C in a dry nitrogen atmosphere, and where the oxidation level of the functionalized carbon nanotubes is based on a percentage weight loss from 200 to 600 degrees C.

In some of the foregoing embodiments of the polymer compositions, an average length of the functionalized carbon nanotubes is less than or equal to 1.2 microns. In some implementations, the functionalized carbon nanotubes comprise double-wall carbon nanotubes. In other implementations, the functionalized carbon nanotubes comprise multi-wall carbon nanotubes having 5 to 15 walls.

In some of the foregoing embodiments of the polymer compositions, a length of the functionalized carbon nanotubes is between 0.4 microns and 15 microns. In some such implementations, the polymer composition further comprises carbon black, carbon fibers, graphene, non-functionalized multi-walled carbon nanotubes, single-walled functionalized or non-functionalized carbon nanotubes, or a combination thereof.

In some of the foregoing embodiments of the polymer compositions, at least one polymer of the one or more polymers is selected from the group consisting of polycarbonate, polycarbonate copolymers, polycarbonate-siloxane copolymers, polyetherimide, polyetherimide-siloxane copolymers, polymethylmethacrylate (PMMA), polyphenylene ether, polyphenylene ether (PPE)-siloxane copolymers, polyamides, polyesters, and a combination thereof.

Some embodiments of the present methods comprise: injecting a polymer composition into a mold defining a cavity such that the polymer composition flows into the cavity to form a molded part, the polymer composition comprising a polymer and functionalized carbon nanotubes; and removing the molded part from the mold where the molded part has a cumulative liquid particle count of particles from 0.2 to 2 microns of 5000 per milliliter or less. In some implementations of the embodiments of the present methods, the method further comprises combining, at an extrusion device, the polymer and the functionalized carbon nanotubes; and providing, from the extrusion device to an injection device, the polymer composition for injection into the mold. In some implementations of the embodiments of the present methods, the functionalized carbon nanotubes have a length of less than or equal to 1.2 microns, include 5 to 15 walls, included one or more oxygen based functional groups, and have an oxidation level between 3 and 25 wt% as determined by thermogravimetric analysis (TGA). In some implementations, a molded part formed by some of the foregoing embodiments of the present methods is a conductive polymer, an antistatic polymer, or an electrically static dissipative polymer.

As used herein, various terminology is for the purpose of describing particular implementations only and is not intended to be limiting of implementations. For example, as used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). The term "coupled" is defined as connected, although not necessarily directly, and not necessarily mechanically; two items that are "coupled" may be unitary with each other. The terms "a" and "an" are defined as one or more unless this disclosure explicitly requires otherwise. The term "substantially" is defined as largely but not necessarily wholly what is specified (and includes what is specified; e.g., substantially 90 degrees includes 90 degrees and substantially parallel includes parallel), as understood by a person of ordinary skill in the art. In any disclosed implementation, the term "substantially" may be substituted with "within [a percentage] of' what is specified, where the percentage includes .1, 1, or 5 percent; and the term "approximately" may be substituted with "within 10 percent of' what is specified. The phrase "and/or" means and or. To illustrate, A, B, and/or C includes: A alone, B alone, C alone, a combination of A and B, a combination of A and C, a combination of B and C, or a combination of A, B, and C. In other words, "and/or" operates as an inclusive or.

The terms "comprise" (and any form of comprise, such as "comprises" and "comprising"), "have" (and any form of have, such as "has" and "having"), and "include" (and any form of include, such as "includes" and "including"). As a result, an apparatus that "comprises," "has," or "includes" one or more elements possesses those one or more elements, but is not limited to possessing only those one or more elements. Likewise, a method that "comprises," "has," or "includes" one or more steps possesses those one or more steps, but is not limited to possessing only those one or more steps.

Any implementation of any of the systems, methods, and article of manufacture can consist of or consist essentially of - rather than comprise/have/include - any of the described steps, elements, and/or features. Thus, in any of the claims, the term "consisting of' or "consisting essentially of' can be substituted for any of the open-ended linking verbs recited above, in order to change the scope of a given claim from what it would otherwise be using the open-ended linking verb. Additionally, the term "wherein" may be used interchangeably with "where."

Further, a device or system that is configured in a certain way is configured in at least that way, but it can also be configured in other ways than those specifically described. The feature or features of one implementation may be applied to other implementations, even though not described or illustrated, unless expressly prohibited by this disclosure or the nature of the implementations.

Some details associated with the implementations are described above, and others are described below. Other implementations, advantages, and features of the present disclosure will become apparent after review of the entire application, including the following sections: Brief Description of the Drawings, Detailed Description, and the Claims.

### BRIEF DESCRIPTION OF THE DRAWINGS

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers. The figures are drawn to scale (unless otherwise noted), meaning the sizes of the depicted elements are accurate relative to each other for at least the implementation depicted in the figures. Views identified as schematics are not drawn to scale.
**FIG. 1** is a diagram that illustrates an example of a system for creating a molded part using a polymer composition including functionalized carbon nanotubes.
**FIG. 2** is a diagram that illustrates a perspective view of an example of the polymer composition of FIG. 1.
**FIG. 3** is a perspective view of an example of a system for producing a molded part.
**FIG. 4** is a flowchart illustrating an example of a method of manufacturing functionalized carbon nanotubes.
**FIG. 5** is a flowchart illustrating an example of a method of manufacturing a polymer composition including functionalized carbon nanotubes.
**FIG. 6** is a flowchart illustrating an example of a method of manufacturing molded part using a polymer composition including functionalized carbon nanotubes.

### DETAILED DESCRIPTION OF ILLUSTRATIVE IMPLEMENTATIONS

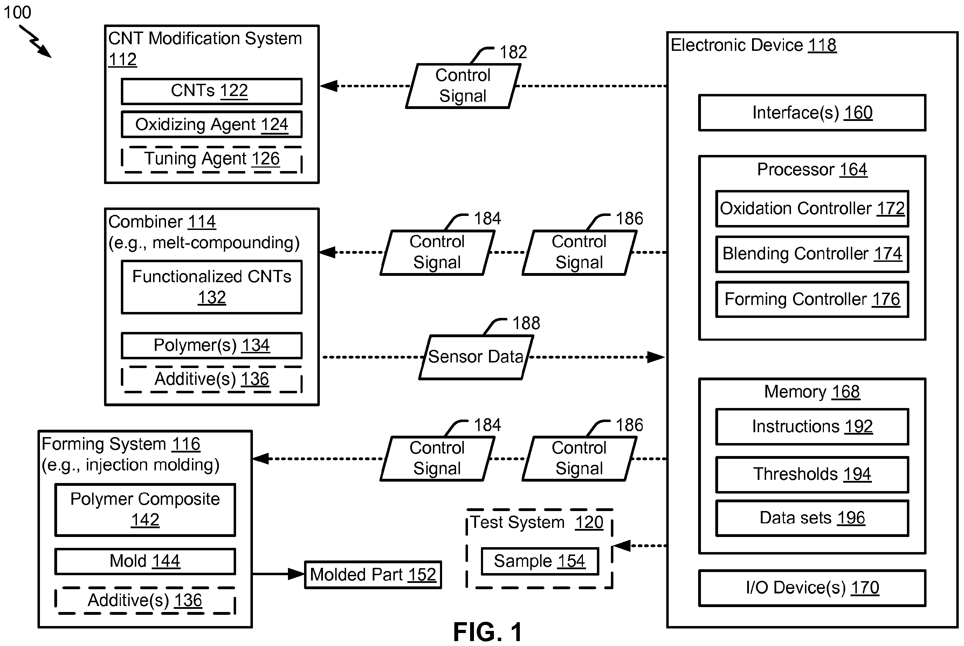

Referring to FIG. 1, a block diagram of a system 100 for manufacturing a part 152, such as a molded part, is shown. Part 152 includes a polymer composite 142 having functionalized carbon nanotubes 132. Part 152 may be electrically conductive and have reduced sloughing properties, as compared to electronically conductive polymers that incorporate conventional carbon nanotubes, such as non-functionalized carbon nanotubes.

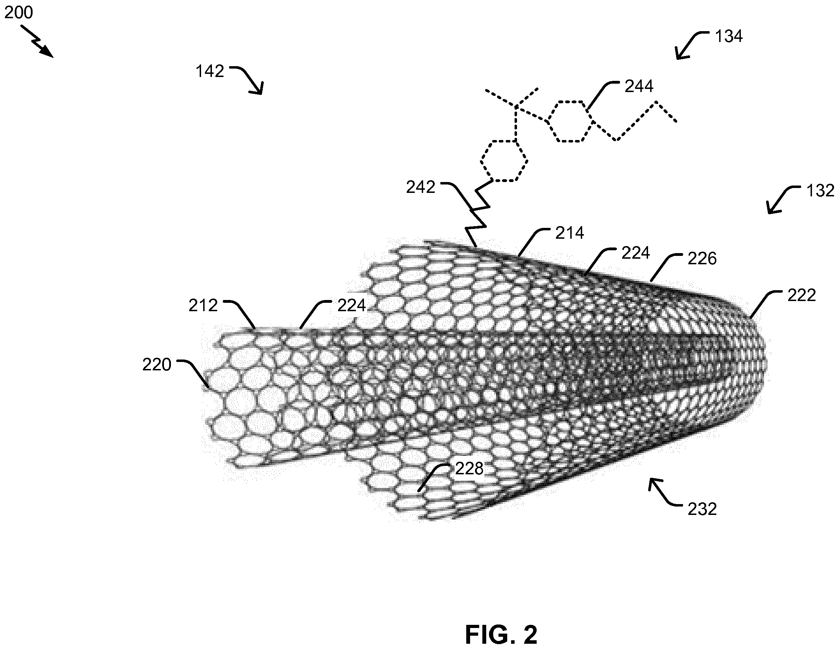

System 100 includes a CNT modification system 112, a combiner 114, a forming system 116, and an electronic device 118. Optionally system 100 include test system 120, such as an LPC test system or a TGA test system. CNT modification system 112 is configured to generate functionalized carbon nanotubes 132 from carbon nanotubes 122 and an oxidizing agent 124. CNT modification system 112 may include or correspond to a wet etch or plasma treatment oxidation system which is configured to oxidize the carbon nanotubes 122 to form functional groups thereon, thereby creating functionalized carbon nanotubes 132. In some implementations, the carbon nanotubes 122 are formed by chemical vapor deposition (CVD). Functionalized carbon nanotubes 132 are described further with reference to FIG. 2.

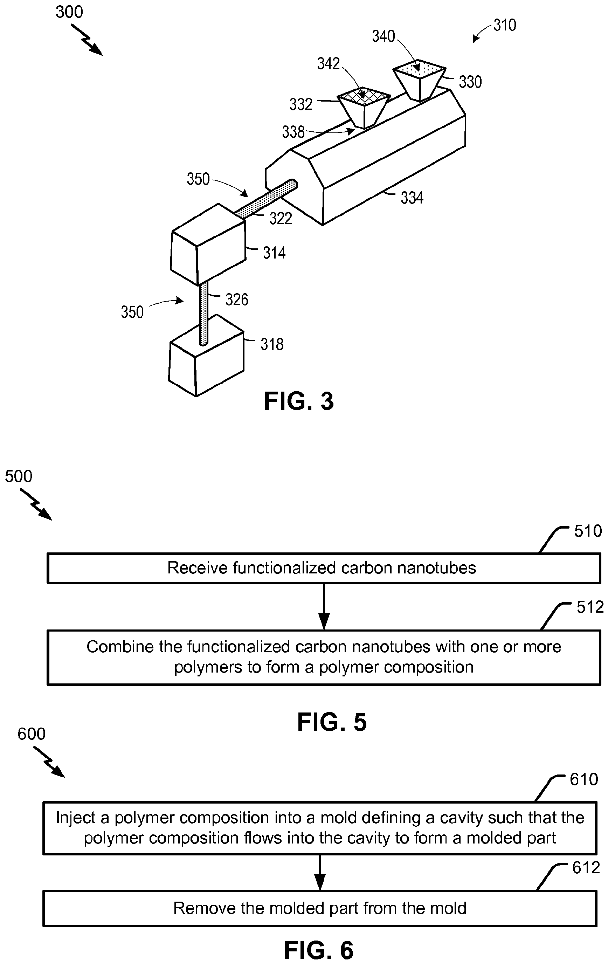

Combiner 114 is configured to create a polymer composite 142 (e.g., a blended composition) from functionalized carbon nanotubes 132 and one or more polymers 134. For example, combiner 114 is configured to generate pellets of polymer composite 142. Combiner 114 may include or correspond to a melt-compounding system or a melt-blend combiner. Polymer composite 142 and polymer 134 are described further with reference to FIG. 2. Forming system 116 is configured to generate a part 152, such as a molded part, using the polymer composite 142. Forming system 116 may include or correspond to an injection molding system, an extrusion system, or a combination thereof. Although listed as separate systems, combiner 114 and forming system 116 may be incorporated into a single system, such as described with reference to FIG. 3.

Electronic device 118 includes one or more interfaces 160, one or more processors (e.g., one or more controllers), such as a representative processor 164, a memory 168, and one or more input/output (I/O) devices 170. Interfaces 160 may include a network interface and/or a device interface configured to be communicatively coupled to one or more other devices, such as CNT modification system 112, combiner 114, forming system 116, or test system 120. For example, interfaces 160 may include a transmitter, a receiver, or a combination thereof (e.g., a transceiver), and may enable wired communication, wireless communication, or a combination thereof. Although electronic device 118 is described as a single electronic device, in other implementations system 100 includes multiple electronic devices. In such implementations, such as a distributed control system, the multiple electronic devices each control a sub-system of system 100, such as CNT modification system 112, combiner 114, forming system 116, or test system 120.

Processor 164 includes oxidation controller 172, blending controller 174, and forming controller 176. For example, oxidation controller 172 (e.g., processor 164) may be configured to generate and/or communicate one or more oxidation control signals 182 to CNT modification system 112. Blending controller 174 is configured to control (or regulate) an environment, such as an air quality, temperature, and/or pressure, within combiner 114 (e.g., a chamber or extruder thereof) and/or delivery/injection of materials into combiner 114. For example, blending controller 174 may be configured to generate and/or communicate one or more environment control signals 184 to combiner 114, one or more ingredient delivery control signals 186 to combiner 114, or a combination thereof.

Forming controller 176 is configured to control (or regulate) an environment, such as a temperature (e.g., heat) and/or pressure, within forming system 116 (e.g., mold 144 thereof) and/or delivery/injection of materials into forming system 116 (e.g., mold 144 thereof). For example, forming controller 176 may be configured to generate and/or communicate one or more environment control signals 184 to forming system 116, one or more ingredient delivery control signals 186 to forming system 116, or a combination thereof

Although one or more components of processor 164 are described as being separate components, at in some implementations, one or more components of the processor 164 may be combined into a single component. For example, although oxidation controller 172 and blending controller 174 are described as being separate, in other implementations, oxidation controller 172 and blending controller 174 may be incorporated into a single controller. Additionally, or alternatively, one or more components of processor 164 may be separate from (e.g., not included in) processor 164. To illustrate, oxidation controller 172 may be separate and distinct from processor 164.

Memory 168, such as a non-transitory computer-readable storage medium, may include volatile memory devices (e.g., random access memory (RAM) devices), nonvolatile memory devices (e.g., read-only memory (ROM) devices, programmable read-only memory, and flash memory), or both. Memory 168 may be configured to store instructions 192, one or more thresholds 194, and one or more data sets 196. Instructions 192 (e.g., control logic) may be configured to, when executed by the one or more processors 164, cause the processor(s) 164 to perform operations as described further here. For example, the one or more processors 164 may perform operations as described with reference to FIGS. 3-6. The one or more thresholds 194 and one or more data sets 196 may be configured to cause the processor(s) 164 to generate control signals. For example, the processors 164 may generate and send control signals responsive to receiving sensor data, such as sensor data 188 from combiner 114. The temperature or ingredient flow rate can be adjusted based on comparing sensor data to one or more thresholds 194, one or more data sets 196, or a combination thereof.

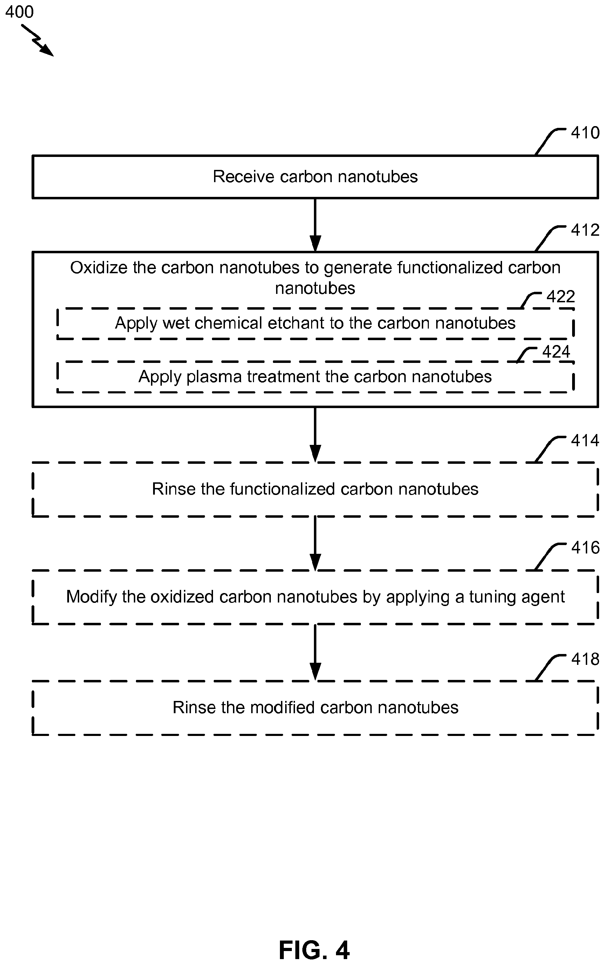

In some implementations, processor 164 may include or correspond to a microcontroller/microprocessor, a central processing unit (CPU), a field-programmable gate array (FPGA) device, an application-specific integrated circuits (ASIC), another hardware device, a firmware device, or any combination thereof. Processor 164 may be configured to execute instructions 192 to initiate or perform one or more operations described with reference to FIG. 3 and/or one more operations of the methods of FIGS. 4-6.

The one or more I/O devices 170 may include a mouse, a keyboard, a display device, the camera, other I/O devices, or a combination thereof. In some implementations, the processor(s) 164 generate and send control signals responsive to receiving one or more user inputs via the one or more I/O devices 170.

Electronic device 118 may include or correspond a communications device, a mobile phone, a cellular phone, a satellite phone, a computer, a tablet, a portable computer, a display device, a media player, or a desktop computer. Additionally, or alternatively, the electronic device 118 may include a set top box, an entertainment unit, a personal digital assistant (PDA), a monitor, a computer monitor, a television, a tuner, a video player, any other device that includes a processor or that stores or retrieves data or computer instructions, or a combination thereof.

In some implementations, system 100 further includes test system 120 for performing an LPC test, i.e., an LPC test system. LPC test system is configured to perform an LPC test on a sample 154 of molded part 152 to obtain an LPC value of molded part 152. LPC test system includes or corresponds to an ultrasonic cleaner (e.g., ultrasonic bath) and an LPC measurement device. For example, LPC test system may include a Crest 40 kHz and 68 kHz ultrasonic cleaner and a SLS-1200 LiQuilaz-S02-HF Particle Measurement System in a particular implementation. The LPC test system may be controlled manually or by signals (e.g., control signal(s) 184, 186), such as a control signal from electronic device 118. In other implementations, system 100 further includes test system 120 for performing a TGA test, i.e., a TGA test system. In such implementations, TGA test system is configured to perform a TGA test on a sample 154 of functionalized carbon nanotubes 132 to obtain an oxidation level of the functionalized carbon nanotubes 132, as described with reference to FIG. 2.

During operation of system 100, functionalized carbon nanotubes 132 are formed from carbon nanotubes 122 (e.g., received or grown double-wall or multi-wall carbon nanotubes). For example, CNT modification system 112 modifies (i.e., functionalizes) carbon nanotubes 122 by applying oxidizing agent 124 via wet etching or plasma treatment to oxidize carbon nanotubes 122 to form functionalized carbon nanotubes 132. To illustrate, oxidation controller 172 may send one or more oxidation control signals 182 to CNT modification system 112. The oxidation control signals 182 may include signals configured to cause CNT modification system 112 to apply liquid chemical etches using oxidizing agent 124 or plasma treatments using oxidizing agent 124 to the carbon nanotubes 122 to oxidize the carbon nanotubes 122, such as sidewall carbon atoms thereof. Additionally, CNT modification system 112 can perform ozonization (i.e., apply O₃) to oxidize carbon nanotubes 122. Oxidizing the carbon nanotubes 122 forms functionalized carbon nanotubes 132 by oxidizing carbon atoms and/or attaching/forming a functional oxygen group bonded to the carbon atoms, specifically sidewall carbon atoms, as described further with reference to FIG. 2. Additionally, functional groups may be bonded to carbon atoms of nanotube ends.

In a particular implementation, oxidizing agent 124 includes nitric acid or a nitric acid and sulfuric acid mixture. The nitric acid and sulfuric acid mixture may be an aqueous mixture. Additionally, the oxidizing agent 124 may further treat carbon nanotubes 122 to prepare the carbon nanotubes 122 for bonding to the polymer 134. For example the nitric acid or the nitric acid and sulfuric acid mixture removes metal residues from (e.g., left behind by) catalysts used to form the carbon nanotubes, specifically catalysts used during a CVD process to grow/form carbon nanotubes 122.

Additionally, the oxidation control signals 182 may include signals configured to cause CNT modification system 112 to rinse the oxidized carbon nanotubes 122 (e.g., the functionalized carbon nanotubes 132) to remove contaminants. In some implementations, the oxidized carbon nanotubes 122 are further treated with tuning agent 126 by CNT modification system 112. To illustrate, CNT modification system 112 applies tuning agent 126 to further modify the oxidized carbon nanotubes 122 by modifying functional groups attached to the oxidized carbon nanotubes 122. To illustrate, tuning agent 126 reacts with one or more of the functional groups of the oxidized carbon nanotubes 122 to chemically modify the functional groups for increased adhesion to polymer 134 and to generate functionalized carbon nanotubes 132. In other implementations, carbon nanotubes 122 are processed to form functionalized carbon nanotubes 132 by amidixation (e.g., imidization) and/or epoxidation, as opposed to oxidation.

After generation of functionalized carbon nanotubes 132 (and optionally tuning/ further modification thereof), the functionalized carbon nanotubes 132 are provided to combiner 114. A polymer composite 142 (e.g., a polymer composition) is generated by the combiner 114. For example, the combiner 114 combines (e.g., mixes or blends), responsive to control signals 184, 186 from the blending controller 174, functionalized carbon nanotubes 132 and polymer 134 (and optionally additive(s) 136). To illustrate, blending controller 174 may send one or more environment control signals 184 to combiner 114 to adjust conditions (e.g., heat, pressure, air quality) of the combiner 114 or conditions of the polymer composite 142 (viscosity, temperature, etc.). Additionally or alternatively, blending controller 174 may send one or more ingredient delivery control signals 186 to combiner 114 to adjust rates and or amounts of functionalized carbon nanotubes 132, polymer 134, one or more additives 136, or a combination thereof. Exemplary additives for increasing conductivity include carbon black, carbon fibers, graphene, non-functionalized multi-walled carbon nanotubes, single-walled functionalized or non-functionalized carbon nanotubes, or a combination thereof.

After formation of polymer composite 142, the polymer composite 142 is provided to forming system 116 and forming system 116 forms or generates molded part 152. For example, forming system 116 may form molded part 152 via injection molding. To illustrate, forming controller 176 may send or more control signals to control delivery (e.g., injection) of polymer composite 142 to mold 144 of forming system 116. Mold 144 may include or correspond to a tool or die. In some implementations, mold 144 is a negative mole and includes or defines one or more cavities that correspond to a shape of molded part 152.

Additionally or alternatively, forming controller 176 may send or more control signals to control curing of polymer composite 142, such as control application of temperature and pressure to mold, such as when polymer composite 142 is provided to forming system 116 in pellets and/or not provided in a molten state. Forming controller 176 may further send one or more control signals to control cooling of polymer composite 142 and release of molded part 152 from mold 144. For example, mold 144 may have multiple parts and the multiple parts may be decoupled from each other responsive to control signals to reveal and enable release of molded part 152.

In some implementations, a sample 154 is taken from molded part 152 and the test system 120 analyzes the sample 154 to generate an LPC value for molded part 152. In some implementations, the test system 120 is in a Class 100 clean environment and an LPC test is performed in the Class 100 clean environment. For example, glassware (e.g., a glass beaker) is cleaned by adding 2-3mL of 5% Micro 90 cleaning solution to pure water (e.g., water from a by a Pure Lab Pure water machine) and placing the glassware into an 68 kHz ultrasonic bath for 2 min. Next the cleaning solution is decanted and the glassware rinsed with pure water. The glassware is filled with pure water and sonicated with 68 kHz ultrasonic waves at a power of 103.68 Watts for 2 minutes after which the solution is placed into an LPC measurement device, such as SLS-1200 LiQuilaz-S02-HF Particle Measurement System. The LPC measurement device applies laser light to the solution and detects scattered light therefrom to generate the LPC value for the glassware. The glassware is deemed clean and ready for use if the following condition is satisfied: the cumulative particle count of particles from 0.3 to 2 microns is less than 20 per milliliter. If not, cleaning is continued until this condition is met. The clean glassware can then be used for the liquid particle count determination of the sample 154. As an illustrative example, sample 154 is coupled to and suspended from a line (e.g., a fishing line) and placed in a clean glass beaker containing deionized and/or degassed water, such as water from the Pure Lab Pure water machine. The glass beaker is placed in an ultrasonic cleaner of the test system 120, and the ultrasonic cleaner generates ultrasonic waves for a particular duration to ultrasonically clean/wash sample 154. To illustrate, 40 kHz ultrasonic waves are applied to the glass beaker for 3 minutes. This cleaning step is repeated 3 times. Then the clean sample is placed in a glass beaker containing deionized and/or degassed water, such as water from the Pure Lab Pure water machine and subjected to 68 kHz ultrasonic waves applied to the beaker (and sample 154 within) for 2 minutes at a power setting of substantially 104 watts, and the ultrasonic waves cause particles of sample 154 to be removed and be mixed or suspended in the water. A solution of sample 154 particles and the water from the beaker is placed into an LPC measurement device, such as SLS-1200 LiQuilaz-S02-HF Particle Measurement System. The LPC measurement device applies laser light to the solution and detects scattered light therefrom to generate the LPC value for molded part 152.

In some implementations, sample 154 has improved sloughing properties (e.g., improved resistance to sloughing of carbon nanotubes) as compared to a sample of a part formed with non-functionalized carbon nanotubes. To illustrate, an LPC value of sample 154 is less than an LPC value of a sample of another part formed from a polymer composition including non-functionalized carbon nanotubes. In such implementations, the polymer compositions used to form molded part 152 and the other part are similar, that is the other polymer composition has substantially similar weight percentages of polymers and nanotubes as compared to polymer composition 142. Additionally, the parts (i.e., molded part 152 and the other part) are formed with the same, or a substantially similar, method of forming (e.g., a particular extrusion method) and are tested with the same, or a substantially similar, method of LPC testing (e.g., a particular LPC test method). In a particular implementation, the parts (i.e., molded part 152 and the other part) have a substantially similar conductivity level. Substantially similar methods of forming and testing include using similar equipment and parameters.

In some implementations molded part 152 has a particular conductivity and/or shielding property. For example, molded part 152 may be electrically static dissipative (ESD), anti-static or EMI resistant. To illustrate, molded part 152 has a surface resistivity of E+05 to E+11 Ohm/square to provide protection against ESD or has a surface resistivity smaller than E+05 Ohm/square to shield against EMI (i.e., be EMI resistant).

Thus, system 100 of FIG. 1 produces functionalized carbon nanotube with improved bonding and adhesion properties for polymers to enable formation of molded parts with a desired conductivity and reduced sloughing. Polymer composite 142 and/or molded part 152 may include low LPC. For example, the cumulative particle count for particles of 0.2 to 2 microns is less than 5000 per milliliter. Accordingly, the present disclosure overcomes the existing challenges of forming electrically conductive polymers with reduced sloughing by incorporating the functionalized carbon nanotubes, as described herein, into the polymer composite. The conductive polymers with reduced sloughing enable miniaturization of electrical components/devices and prevent damage to electrical components/devices by reducing damage and failure caused by slough.

Referring to FIG. 2, a perspective view 200 of an example of polymer composite 142 of FIG. 1 is shown. Polymer composite 142 is a polymer composition (e.g., a blended composition) and includes one or more polymers 134 and functionalized carbon nanotubes 132. FIG. 2 represents a simplification of polymer composite 142 illustrating a single, multi-walled carbon nanotube 232 having a single functional group 242 attached thereto, and illustrating a single polymer chain 244 of polymer 134 attached to functional group 242. Although, polymer composite 142 is illustrated as including a multi-walled carbon nanotube 232 (i.e., a double-walled carbon nanotube), in other implementations polymer composite 142 includes single-walled carbon nanotubes, double-walled carbon nanotubes, multi-walled carbon nanotubes, or a combination thereof. The multi-walled carbon nanotubes 232 may have a concentric tube form, as illustrated in FIG. 2, or may have a rolled form.

As illustrated in FIG. 2, multi-walled carbon nanotube 232 has two walls or tubes, a first tube 212 and a second tube 214. Each tube 212, 214 has a first end 220 (e.g., proximal end) and a second end 222 (e.g., distal end). Each tube 212, 214 has sidewalls 224 extending from the first end 220 to the second end 222. Sidewalls 224 have interior surfaces 226 and exterior surfaces 228.

In FIG. 2, multi-walled carbon nanotube 232 is illustrated with two walls for clarity. In other implementations, functionalized carbon nanotube 132 has more than two walls. For example, in some implementations, the multi-walled carbon nanotube 232 includes 5 to 15 walls. To illustrate, a sheet of graphene may be rolled 5 times to produce a multi-walled carbon nanotube having 5 walls, i.e., 5 layers of carbon atoms spaced from one another. As another example, 5 sets of carbon nanotubes (e.g., single-wall nanotubes) are concentrically arranged (e.g., nested) to form a multi-walled carbon nanotube having 5 walls, similar to multi-walled carbon nanotube 232. In other implementations, multi-walled carbon nanotube 232 includes a number of walls that is equal to: 3, 4, 5, 6, 7, 8, 9, 10, 11, 12, 13, 14, 15, 16, 17, 18, 19, 20 walls, or more. The functionalized carbon nanotubes 132 may include or correspond to straight nanotubes, kinked nanotubes, nanotubes that contain Stone-Wales defects, or a combination thereof.

The functionalized carbon nanotubes 132 have a purity of greater than 90 percent in some implementations, i.e., a carbon content of greater than 90 percent. In other implementations, the functionalized carbon nanotubes 132 have a purity of greater than or equal to any of substantially: 80, 85, 90, or 95 percent. In a particular implementation, the functionalized carbon nanotubes 132 do not include amorphous carbon. Additionally, or alternatively, the functionalized carbon nanotubes 132 have residue metal impurities and/or metal oxide impurities of less than 10 percent. Exemplary impurities include metals Fe, Mg, Co, Al, Mo, and Mn, and/or oxides thereof. In other implementations, the functionalized carbon nanotubes 132 have residue metal impurities and/or metal oxide impurities of less than or equal to any of substantially: 20, 15, 10, or 5 percent.

In some implementations, a length of functionalized carbon nanotubes 132 is less than or equal to 15 microns. In a particular implementation, a length of functionalized carbon nanotubes 132 is less than or equal to 1.2 microns. In other implementations, a length of functionalized carbon nanotubes 132 is between any two of substantially: 0.4, 0.6, 0.8, 1, 1.2, 1.4, 1.5, 1.6, 1.8, 2, 3, 4, 5, 6, 8, 10, 12, 14, or 15 microns. A length of functionalized carbon nanotubes 132 may indicate an average or mean length of all functionalized carbon nanotubes 132 or a threshold length that each functionalized carbon nanotubes 132 satisfies. Oxidizing the carbon nanotubes 122 may reduce a length of the carbon nanotubes 122, i.e., the functionalized carbon nanotubes 132 are shorter in length than the carbon nanotubes 122.

In some implementations, a width of functionalized carbon nanotubes 132 is less than or equal to 20 nm. In a particular implementation, a width of functionalized carbon nanotubes 132 is less than or equal to 13 nm. In some implementations, a length to diameter (i.e., 1/D) ratio is between 20 and 100. In a particular implementation, an 1/D ratio of functionalized carbon nanotube 132 is between 40 and 80.

In some implementations, the functionalized carbon nanotubes 132 have an aspect ratio from substantially 25 to substantially 500. In a particular implementation, the functionalized carbon nanotubes 132 have an aspect ratio from substantially 60 to substantially 200. Additionally or alternatively, in some implementations the functionalized carbon nanotubes 132 have a surface area (i.e., specific surface area (SSA) of area per unit mass) of between 200 to 300 meters squared per gram (m²/g). In other implementations, the functionalized carbon nanotubes 132 have a surface area of greater than 600 m²/g.

As illustrated in FIG. 2, multi-walled carbon nanotube 232 has a functional group 242 coupled to exterior surface 226 of the second tube 214, for clarity. In reality, multi-walled carbon nanotube 232 has a plurality of a functional groups 242 attached to sidewalls 224 thereof, thereby forming or being a functionalized carbon nanotube 132. The functional group 242 is coupled to polymer 134 (e.g., a particular polymer chain 244 or a polymer molecule). One or more functional groups 242 of functionalized carbon nanotube 132 may form covalent or polar bonds with polymer 134 and have increased bonding/affinity to polymer 134 than carbon atoms (e.g., unoxidized carbon atoms) of functionalized carbon nanotube 132. Additionally, polymer chains 244 of polymer 134 can be bonded directly to carbon atoms (e.g., oxidized carbon atoms) of functionalized carbon nanotube 132 and other polymer chains 244.

In some implementations, the functional groups 242 include or correspond to oxygen based or oxygen containing functional groups (e.g., oxygen functionalities), such as compounds that contain C-O bonds. Examples of oxygen based or oxygen containing functional groups include: alcohols (e.g., hydroxyls), ketones (e.g., carbonyls), aldehydes, acyl halides, carbonates, carboxylates, carboxylic acids, esters, methoxys, hydroperoxides, peroxides, ethers, hemiacetals, hemiketals, acetals, ortoesters, hereocycles, and orthocarbonate esters. In a particular implementation, functional groups 242 of functionalized carbon nanotube 132 includes or corresponds to hydroxyl groups, carboxylic acid groups, or a combination thereof.

In some implementations, an oxidation level of the functionalized carbon nanotubes 132 is between 3 and 25 wt%. The oxidation level as used herein is defined as an amount by weight (weight percent) of oxygenated functional groups covalently bound to functionalized carbon nanotubes 132. A thermogravimetric method can be used to determine the weight percent of oxygenated functional groups on (e.g., covalently bound to) the functionalized carbon nanotubes 132. For example, a particular thermogravimetric analysis (TGA) method involves heating substantially 5 mg of dried functionalized carbon nanotubes 132 at a rate of 5 degrees C per minute from room temperature to 1000 degrees C in a dry nitrogen atmosphere. The percentage weight loss from 200 to 600 degrees C is taken as the percent weight loss of oxygenated functional groups. In other implementations, the oxygen level of the functionalized carbon nanotubes 132, as determined by the above TGA method, is between any two of substantially: 1, 2, 3, 4, 5, 10, 15, 20, 25, and 30 wt%.

In some implementations, an amount of carboxylic acid groups coupled to functionalized carbon nanotubes 132, as determined by titration, ranges from 0.02 to 0.18 millimoles/g of the functionalized carbon nanotubes. In other implementations, an amount of carboxylic acid groups coupled to functionalized carbon nanotubes 132, as determined titration, is between any two of substantially: 0.005, 0.01, 0.02, 0.04, 0.06, 0.08, 0.10, 0.12, 0.14, 0.16, 0.18, 0.20 millimoles/g of the functionalized carbon nanotubes. Additionally or alternatively, an amount of hydroxyl groups coupled to functionalized carbon nanotubes 132, as determined by titration, ranges from 0.04 to 0.34 millimoles/g of the functionalized carbon nanotubes. In other implementations, an amount of hydroxyl groups coupled to functionalized carbon nanotubes 132, as determined by titration, is between any two of substantially: 0.005, 0.01, 0.02, 0.03, 0.04, 0.06, 0.08, 0.12, 0.16, 0.20, 0.24, 0.28, 0.32, 0.34, 0.35, 0.36, 0.37, 0.38, 0.39, 0.40 millimoles/g of the functionalized carbon nanotubes. As an illustrative, non-limiting example, Boehm titration is used to determine oxidation of functionalized carbon nanotubes 132 and/or presence of particular oxygen based functional groups 242.

In some implementations, overall oxidation on an exterior surface 226 of a sidewall 224 of functionalized carbon nanotubes 132 is between 5 and 25 weight percent (wt%) oxygen based functional groups 242. For multi-walled carbon nanotubes, exterior surfaces 226 of other sidewalls 224 (e.g., interior sidewalls 224) may have a similar overall oxidation wt% or a different (e.g., lesser) overall oxidation wt% than an outermost sidewall 224. In a particular implementation, overall oxidation on an exterior surface 226 of a sidewall 224 of functionalized carbon nanotubes 132 is between 15 and 22 wt% oxygen based functional groups 242. In other implementations, overall oxidation on an exterior surface 226 of a sidewall 224 of functionalized carbon nanotubes 132 is substantially between any two of: 2, 3, 4, 5, 6, 7, 8, 9, 10, 12, 14, 15, 16, 18, 20, 22, 24, 25, 26, 27, 28, 29, 30 wt% oxygen based functional groups 242. The overall oxidation weight percent may indicate an average or mean wt% of oxygen based functional groups 242 of all functionalized carbon nanotubes 132 or a range of overall oxidation wt%s of oxygen based functional groups 242 that each functionalized carbon nanotubes 132 satisfies.

In some implementations, functionalized carbon nanotubes 132 may be modified to improve dispersion in the polymer composite 142 and/or adhesion to polymer 134. That is the base carbon nanotubes 122 are further modified or the functionalized carbon nanotubes 132 (e.g., the unreacted carbon atoms, attached functional groups, or both thereof) are chemically modified. For example, tuning agent 126 of FIG. 1 is applied to functionalized carbon nanotubes 132. As an illustrative, non-limiting example, functionalized carbon nanotubes 132 are reacted with an amine (e.g., an aliphatic long-chain amine) to modify or tune the attached functional groups 242 for increased interaction with polymer 134, and particularly olefins. Increasing the interaction between (e.g., bonding) the tuned functional groups 242 and the polymer 134 improves the dispersion of functionalized carbon nanotubes 132 in the polymer composite 142.

Polymer 134 may include polycarbonate (PC), polycarbonate copolymer (PC COPO) (e.g., Lexan HFD, Lexan SLX, etc.), polycarbonate-siloxane copolymers, polyetherimide, polyetherimide-siloxane copolymers, polymethylmethacrylate (PMMA), polyphenylene ether, polyphenylene ether (PPE)-siloxane copolymers, polyamides, polyesters, or a combination thereof.

Additionally or alternatively, polymer 134 may include thermoplastic polymers, copolymers, and blends thereof. The polymer 134 may include a polyester, such as a semicrystalline polymer, polyethylene terephthalate (PET), polyethylene terephthalate glycol-modified (PETG), glycol-modified poly-cyclohexylenedimethylene terephthalate (PCTG), polycyclohexylenedimethylene terephthalate (PCT), isophthalic acid-modified polycyclohexylenedimethylene terephthalate (PCTA), and Tritan™ (a combination of dimethyl terephthalate, 1,4-cyclohexanedimethanol, and 2,2,4,4-tetramethyl-1,3-cyclobutanediol from Eastman Chemical). Additionally, or alternatively, the material may include a resin, such as Xylex™ (a combination of PC and an amorphous polyester), polybutylene terephthalate (PBT) (e.g., a resin from the Valox™ line of PBT), and/or a PET resin available from SABIC™. Additionally, or alternatively, the material may include liquid-crystal polymer (LCP), polyether ether ketone (PEEK), fluorinated ethylene propylene (FEP), polysulfone (PSU), polyethylenimine, polyimide (PI), cyclic olefin copolymer (COC), cyclo olefin polymer (COP), polyamide (PA), acrylonitrile butadiene styrene (ABS), or a combination thereof.

The term "polycarbonate" (or "polycarbonates"), as used herein, includes copolycarbonates, homopolycarbonates and (co)polyester carbonates. The term polycarbonate can be further defined as compositions have repeating structural units of the formula (1): 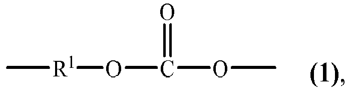 in which at least 60 percent of the total number of R1 groups are aromatic organic radicals and the balance thereof are aliphatic, alicyclic, or aromatic radicals. In a further aspect, each R1 is an aromatic organic radical and, more preferably, a radical of the formula (2):

HO-A1-Y1-A2-OH (2),

where each of A1 and A2 is a monocyclic divalent aryl radical and Y1 is a bridging radical having one or two atoms that separate A1 from A2. In various aspects, one atom separates A1 from A2. For example, radicals of this type include, but are not limited to, radicals such as -O-, -S-, -S(O)-, -S(O2)-, -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical Y1 may be a hydrocarbon group or a saturated hydrocarbon group, such as methylene, cyclohexylidene, or isopropylidene, as illustrative, non-limiting examples.

The polymer composite 142 may further include one or more additives (e.g., additive(s) 136) intended to impart certain characteristics to molded part 152. The various additives may be incorporated into polymer composite 142, with the proviso that the additive(s) are selected so as to not significantly adversely affect the desired properties of polymer composite 142 (e.g., the additives have good compatibility with the polymer 134 and functionalized carbon nanotubes 132). For example, the additive(s) selected do not significantly adversely affect bonding between polymer 134 and functionalized carbon nanotubes 132, sloughing, or electrical conductivity.

As illustrative, non-limiting examples, polymer composite 142 may include one or more additives (e.g., 136), such as an impact modifier, flow modifier, antioxidant, thermal (e.g., heat stabilizer), light stabilizer, ultraviolet (UV) light stabilizer, UV absorbing additive, plasticizer, lubricant, antistatic agent, antimicrobial agent, colorant (e.g., a dye or pigment), surface effect additive, radiation stabilizer, or a combination thereof. The additives may include impact modifiers such as styrene-butadiene thermoplastic elastomers, fire-retardant additives, colorants, thermal stabilizers, antioxidants, antistatic agents and flow promoters. Such additives can be mixed at a suitable time during the mixing of the components for forming the polymer composite 142.

As an illustrative, non-limiting example, addition of one or more compatibilizers capable of reacting with oxygen based functional groups 242 will improve adhesion to polymer 134. In a particular implementation, compatibilizers capable of reacting with carboxylic acid functional groups 242 of functionalized carbon nanotubes 132 will improve adhesion to the polymer 134. In a particular implementation, glycidyl methacrylate (GMA)-based compatibilizers, such as Lotader AX8900, polyolefins, or PBT compositions are added to react with oxygen based functional groups 242 of functionalized carbon nanotubes 132.

As another illustrative, non-limiting example, polymer composite 142 may include a mold release agent to facilitate ejection of a molded part from the mold assembly. Examples of mold release agents include both aliphatic and aromatic carboxylic acids and their alkyl esters, such as stearic acid, behenic acid, pentaerythritol tetrastearate, glycerin tristearate, and ethylene glycol distearate, as illustrative, non-limiting examples. Mold release agents can also include polyolefins, such as high-density polyethylene, linear low-density polyethylene, low-density polyethylene, and similar polyolefin homopolymers and copolymers. Additionally, some compositions of mold release agents may use pentaerythritol tetrastearate, glycerol monostearate, a wax, or a poly alpha olefin. Mold release agents are typically present in the composition at 0.05 to 10 wt%, based on total weight of the composition, such as 0.1 to 5 wt %, 0.1 to 1 wt%, or 0.1 to 0.5 wt%. Some mold release agents have high molecular weight, typically greater than or equal to 300, to prohibit loss of the release agent from the molten polymer mixture during melt processing.

In some implementations, polymer composite 142 includes functionalized carbon nanotubes 132 from substantially 0.1% to substantially 10% by weight of the polymer composite 142. In a particular implementation, polymer composite 142 includes functionalized carbon nanotubes 132 in an amount less than or equal to 5 wt%. In another implementation, polymer composite 142 includes functionalized carbon nanotubes 132 in an amount less than or equal to 3 wt%.

Thus, polymer composite 142 has increased bonding and adhesion between polymer 134 and functionalized carbon nanotubes 132 thereof by incorporating the functionalized carbon nanotubes 132 described herein into polymer composite 142. The increased bonding and adhesion increases resistance to sloughing of parts made using polymer composite 142. For example, parts made from polymer composite 142 may have lower LPC values than parts made from conventional polymer compositions.

Referring to FIG. 3, an example of a system 300 for producing a molded part is shown. System 300 is configured to use an extrusion process to form a polymer composition (e.g., polymer composite 142) and an injection molding process to form the molded part 152 from the polymer composite 142, as described herein. System 300 includes an extruder 310, an injector 314, and a die 318 (e.g., a mold). Extruder 310 is coupled to injector 314 via one or more conduits 322, such as one or more tubes. Injector 314 is coupled to die 318 via one or more conduits 326, such as one or more tubes. System 300 may be controlled by a controller (not shown), such as processor 164 and/or forming controller 176 of FIG. 1

Extruder 310 includes one more hoppers, such as a first hopper 330 and a second hopper 332, and a barrel 334 coupled to the one or more hoppers. For example, barrel 334 may be coupled to a hopper via a feed throat 338. Each hopper 330, 332 is configured to receive material (e.g., pellets, granules, flakes, powders, and/or liquids) that is provided (e.g., gravity fed or force fed) from the hopper to barrel 334 via a corresponding feed throat 338. As shown, first hopper 330 has received a first material 340 and second hopper 332 has received a second material 342. First material 340 includes a polymer, such as polymer 134, and second material 342 includes functionalized carbon nanotubes 132. Although described as being provided to separate hoppers, in other implementations, first and second materials 340, 342 may be provided by the same hopper.

In some implementations, another material can be combined with first and second materials 340, 342 in the extruder 10. For example, the other material may be received by the extruder 310 via the one or more hoppers. The other material can include one or more additive(s) 136, such as an impact modifier, flow modifier, antioxidant, heat stabilizer, light stabilizer, ultraviolet (UV) light stabilizer, UV absorbing additive, plasticizer, lubricant, antistatic agent, antimicrobial agent, colorant (e.g., a dye or pigment), surface effect additive, radiation stabilizer, or a combination thereof, as illustrative, non-limiting examples.

Each hopper 330, 332 provides its corresponding material 340, 342 into barrel 334 where the materials are combined to form a polymer composite 350. For example, the materials are gradually melted in barrel 334 by the mechanical energy (e.g., pressure) generated by turning screws, by heaters arranged along barrel 334, or both. The molten materials are mixed together (e.g., blended) to form polymer composite 350. Polymer composite 350 may include or correspond to polymer composite 142. Polymer composite 350 is provided from barrel 334 via conduit 322 to injector 314. Injector 314 injects polymer composite 350 into die 318 via conduit 326. Polymer composite 350 flows into the die 318 until the polymer composite 350 substantially fills the die 318, such as one or more cavities or features thereof. The polymer composite 350 cools to form molded part 152. In a particular implementation, the molded part 152 has an cumulative LPC count of particles from 0.2 to 2 microns of 5000 per milliliter or less

As shown, polymer composite 350 is provided from extruder 310 to die 318 via injector 314. In other implementations, system 300 may not include injector and extruder 310 may provide polymer composite 350 to die 318 via one or more conduits. Although polymer composite 350 has been described in system 300 using an extrusion process, in other implementations, polymer composite 350 may be formed by another process and provided to injector 314 for injection into die 318.

As described with reference to FIG. 3, system 300 is configured to form a molded part. The molded part includes a polymer composite (including the polymer and the functionalized carbon nanotubes) that may advantageously have an increased resistance to sloughing. For example, the molded part has increased impact resistance to sloughing as compared to molded parts made from polymer compositions having conventional carbon nanotubes. Additionally, the molded part may have a designed conductivity and may be electrically conductive, anti-static, or ESD.

In other implementations, the extruder 310 forms extrudate (e.g., strands of polymer composite 142) which is then cooled in a water bath, or by spraying the extrudate in a conduit 322 (e.g., a conveyor belt) as the extrudate moves from extruder 310 to a granulator via conduit 322. The granulator breaks the extrudate (e.g., the strands thereof) into pieces, such as pellets. The pellets of polymer composite 142 can then be used in an injection molding process or in another molding process.

Referring to FIG. 4, an example of a method of manufacturing functionalized carbon nanotubes is shown. Method 400 may be performed by a manufacturing device or system, such as system 100 (e.g., CNT modification system 112 and/or electronic device 118). The functionalized carbon nanotubes may include or correspond to functionalized carbon nanotubes 132, as described herein.

Method 400 includes receiving carbon nanotubes, at 410. The carbon nanotubes may include or correspond to carbon nanotubes 122 and may be double-walled carbon nanotubes or multi-walled carbon nanotubes, or a combination thereof. In some implementations, method 400 optionally includes growing or forming the carbon nanotubes For example, carbon nanotubes 122 are grown by a CVD process. Method 400 also includes oxidizing the carbon nanotubes to generate functionalized carbon nanotubes, at 412. For example, oxidizing agent 124 is applied to carbon nanotubes 122 in liquid or plasma form and carbon nanotubes 122 are oxidized by oxidizing agent 124 to form oxygen based functional groups 242 thereon to generate functionalized carbon nanotubes 132.

In some implementations, oxidizing the carbon nanotubes includes at applying a wet chemical etchant to the carbon nanotubes, 422. For example, oxidizing agent 124, such as nitric acid or nitric acid and sulfuric acid, is applied a liquid etchant to carbon nanotubes 122. In other implementations, oxidizing the carbon nanotubes includes applying plasma treatment the carbon nanotubes, at 424. For example, nitric acid plasma is applied to carbon nanotubes 122.

In some implementations, method 400 may also include rinsing the functionalized carbon nanotubes, at 414. For example, the functionalized carbon nanotubes 132 are rinsed in an ultrasonic bath with pure water. Rinsing the functionalized carbon nanotubes 132 may remove containments.

Additionally, or alternatively, method 400 further may further include modifying the functionalized carbon nanotubes by applying a tuning agent, at 416. For example, the functionalized carbon nanotubes 132 are chemically reacted with tuning agent 126, such as an amine, to modify functional groups 242 of the functionalized carbon nanotubes 132 for increased adhesion to polymer 134.

In some implementations, method 400 may include rinsing the modified carbon nanotubes, at 418. For example, the functionalized carbon nanotubes 132 are rinsed in a second ultrasonic bath with pure water after treatment with tuning agent 126. One product or article of manufacture that can be formed from method 400 includes polymer composite 142. Rinsing the functionalized carbon nanotubes 13 may remove containments.

Thus, method 400 describes manufacturing of functionalized carbon nanotubes 132. Method 400 advantageously enables improved bonding of the functionalized carbon nanotubes 132 to polymers (e.g., polymer 134) to form improved polymer compositions (polymer composite 142) and electrically conductive polymer parts (including the functionalized carbon nanotubes 132) with reducing sloughing.

Referring to FIG. 5, an example of a method of manufacturing a polymer composition is shown. Method 500 may be performed by a manufacturing device or system, such as system 100 (e.g., combiner 114 and/or electronic device 118) and/or system 300 (e.g., extruder 310). The polymer composition may include or correspond to polymer composite 142 or polymer composite 350, as described herein.

Method 500 includes receiving functionalized carbon nanotubes, at 510. Method 500 also includes combining the functionalized carbon nanotubes with one or more polymers to form a polymer composition, at 512. One product or article of manufacture that can be formed from method 500 includes pellets of polymer composition 142, such as pellets having a cumulative LPC count of particles from 0.2 to 2 microns of 50000 per milliliter or less. Another product or article of manufacture that can be formed from method 500 includes molded part 152, such as a part formed from the pellets and having a cumulative LPC count of particles from 0.2 to 2 microns of 5000 per milliliter or less.

Thus, method 500 describes manufacturing of a polymer composition, such as polymer composite 142. Method 500 advantageously enables creating a polymer composition with increased polymer to nanotube bonding such that electrically conductive polymer compositions (including the functionalized carbon nanotubes) with reducing sloughing can be formed, such as molded part 152.

Referring to FIG. 6, an example of a method of manufacturing a molded part is shown. Method 600 may be performed by a manufacturing device or system, such as system 100 (e.g., forming system 116 and/or electronic device 118) and/or system 300. The molded part may include or correspond to molded part 152, as described herein.

Method 600 includes injecting a polymer composition into a mold, at 610. The mold defines one or more cavities such that, when injected, the polymer composition flows into the mold until the polymer composition substantially fills the one or more cavities. For example, the polymer composition may include or correspond to polymer composite 142 or polymer composite 350, and the mold may include or correspond to mold 144 or die 316. To illustrate, polymer composite 142 is in a molten state when applied to the mold 144 and is cured to form the molded part 152 by cooling in the mold 144. Method 600 also includes removing the molded part from the mold, at 612. To illustrate, one or more pieces of mold 144 are decouple from one another and molded part 152 is removed from mold 144.

Method 600 may further include combining, at an extrusion device, the polymer and the additive to form the polymer composition. For example, the extrusion device may include or correspond to extruder 310. In some such implementations, method 600 also includes providing, from the extrusion device to an injection device, the polymer composition for injection into the mold. For example, the injection device may include or correspond to injector 314. In other implementations, the extrusion device may inject the polymer composition into the mold. One product or article of manufacture that can be formed from method 600 includes a part with a cumulative LPC count of particles from 0.2 to 2 microns of 5000 per milliliter or less.

Thus, method 600 describes manufacturing of a molded part, such as molded part 152 having a cumulative LPC count of particles from 0.2 to 2 microns of 5000 per milliliter or less. Method 600 advantageously enables forming molded parts with reduced sloughing properties. Additionally, or alternatively, the molded part may be electrically conductive.

It is noted that one or more operations described with reference to one of the methods of FIGS. 4-6 may be combined with one or more operations of another of FIGS. 4-6. For example, one or more operations of method 400 may be combined with one or more operations of method 600. Additionally, one or more of the operations described with reference to the systems of FIGS. 1 and 3 may be combined with one or more operations described with reference to one of the methods of FIGS. 4-6.

The above specification and examples provide a complete description of the structure and use of illustrative implementations. Although certain implementations have been described above with a certain degree of particularity, or with reference to one or more individual implementations, those skilled in the art could make numerous alterations to the disclosed implementations without departing from the scope of this disclosure. As such, the various illustrative implementations of the methods and systems are not intended to be limited to the particular forms disclosed. Rather, they include all modifications and alternatives falling within the scope of the claims, and implementations other than the one shown may include some or all of the features of the depicted implementations. For example, elements may be omitted or combined as a unitary structure, connections may be substituted, or both. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one implementation or may relate to several implementations. Accordingly, no single implementation described herein should be construed as limiting and implementations of the disclosure may be suitably combined without departing from the teachings of the disclosure.

The claims are not intended to include, and should not be interpreted to include, means-plus- or step-plus-function limitations, unless such a limitation is explicitly recited in a given claim using the phrase(s) "means for" or "step for," respectively.

## Claims

1. A polymer composition comprising:
functionalized carbon nanotubes, the functionalized carbon nanotubes having multiple walls and one or more oxygen based functional groups; and
one or more polymers,
wherein a molded part formed from the polymer composition has improved sloughing properties as measured by liquid particle analysis (LPC) and as compared to another molded part formed from another composition comprising non-functionalized carbon nanotubes, and
wherein the other composition comprises the one or more polymers in substantially similar weight percentages as the one or more polymers of the polymer composition and comprises the non-functionalized carbon nanotubes in a substantially similar weight percentage as the functionalized carbon nanotubes of the polymer composition.

2. The polymer composition of claim 1, wherein the molded part and the other molded part are formed by similar methods, and wherein LPC values of the molded part and the other molded part are obtained by similar LPC testing methods.

3. The polymer composition of claim 1, wherein the molded part formed from the polymer composition has a cumulative liquid particle count of particles from 0.2 to 2 microns of 5000 per milliliter or less.

4. The polymer composition of claim 1, wherein the functionalized carbon nanotubes have an oxidation level between 3 and 25 wt% as determined by thermogravimetric analysis (TGA).

5. The polymer composition of claim 4, wherein performing the TGA includes heating dried functionalized carbon nanotubes at a rate of 5 degrees C per minute from room temperature to 1000 degrees C in a dry nitrogen atmosphere, and wherein the oxidation level of the functionalized carbon nanotubes is based on a percentage weight loss from 200 to 600 degrees C.

6. The polymer composition of claim 1, wherein pellets formed from the polymer composition have a cumulative liquid particle count of particles from 0.2 to 2 microns of 50000 per milliliter or less, wherein the pellets are used to form the molded part, and wherein the one or more oxygen based functional groups include a hydroxyl group, a carboxylic acid group, or a combination thereof.

7. The polymer composition of claim 1, wherein an average length of the functionalized carbon nanotubes is less than or equal to 1.2 microns.

8. The polymer composition of claim 1, wherein the functionalized carbon nanotubes comprise double-wall carbon nanotubes.

9. The polymer composition of claim 1, wherein the functionalized carbon nanotubes comprise multi-wall carbon nanotubes having 5 to 15 walls.

10. The polymer composition of claim 1, wherein a length of the functionalized carbon nanotubes is between 0.4 microns and 15 microns, and further comprising carbon black, carbon fibers, graphene, non-functionalized multi-wall carbon nanotubes, single-walled functionalized or non-functionalized carbon nanotubes, or a combination thereof.

11. The polymer composition of claim 1, wherein at least one polymer of the one or more polymers is selected from the group consisting of polycarbonate, polycarbonate copolymers, polycarbonate-siloxane copolymers, polyetherimide, polyetherimide-siloxane copolymers, polymethylmethacrylate (PMMA), polyphenylene ether, polyphenylene ether (PPE)-siloxane copolymers, polyamides, polyesters, and a combination thereof.

12. A method of manufacturing a molded part, the method comprising:
injecting a polymer composition into a mold defining a cavity such that the polymer composition flows into the cavity to form a molded part, the polymer composition comprising a polymer and functionalized carbon nanotubes; and
removing the molded part from the mold wherein the molded part has a cumulative liquid particle count of particles from 0.2 to 2 microns of 5000 per milliliter or less.

13. The method of claim 12, further comprising:
combining, at an extrusion device, the polymer and the functionalized carbon nanotubes; and
providing, from the extrusion device to an injection device, the polymer composition for injection into the mold.

14. The method of claim 12, wherein the functionalized carbon nanotubes have a length of less than or equal to 1.2 microns, include 5 to 15 walls, included one or more oxygen based functional groups, and have an oxidation level between 3 and 25 wt% as determined by thermogravimetric analysis (TGA).

15. A molded part formed by the method of any of claims 12-14, wherein the molded part is a conductive polymer, an antistatic polymer, or an electrically static dissipative polymer.
